# EUROPÄISCHE PATENTSCHRIFT

(11) **EP 2 416 045 B1**
(45) Veröffentlichungstag und Bekanntmachung des Hinweises auf die Patenterteilung: **03.08.2016**
(21) Anmeldenummer: 11176555.8
(22) Anmeldetag: 04.08.2011
(51) Int. Cl.: F16L 37/06, F16L 55/132

(54) **Anschlussvorrichtung zum Anschließen eines Druckbehälters an einen Druckprüfstand in selbstverstärkender Ausführung**
Self-reinforcing connection device for connecting a pressurised container to a deadweight tester
Dispositif de raccordement d'un récipient sous pression sur un banc d'essai de pression dans une version auto-renforcée

(30) Priorität: 05.08.2010 DE 102010036865
(43) Veröffentlichungstag der Anmeldung: 08.02.2012
(73) Patentinhaber: Kelvion Brazed PHE GmbH, 04603 Nobitz-Wilchwitz (DE)
(72) Erfinder: Aust, Michael, 04603 Nobitz/Niederleupten (DE)
(74) Vertreter: Bittner, Thomas L.

(56) Entgegenhaltungen:
- GB-A- 819 387
- US-A- 2 469 198
- US-A- 4 345 783
- US-A1- 2007 176 414

## Beschreibung

Die Erfindung betrifft eine Anschlussvorrichtung zum Anschließen eines Druckbehälters an einen Druckprüfstand in selbstverstärkender Ausführung.

### Hintergrund der Erfindung

Druckbehälter müssen zu verschiedenen Zwecken auf ihre Funktionsfähigkeit geprüft werden, indem sie wenigstens mit dem für den Druckbehälter geltenden Betriebsdruck und häufig mit darüber hinausgehenden Drücken beaufschlagt werden. Derartige Funktionsprüfungen finden beispielsweise nach der Herstellung oder auch im Betrieb statt, um die Funktionssicherheit des Druckbehälters zu überprüfen. Druckbehälter im hier verstandenen Sinne sind beispielsweise Wärmetauscher, insbesondere Plattenwärmetauscher, die im Betrieb von Wärmetauschermedien durchflossen werden.

In Verbindung mit Wärmetauschern werden zunehmend höhere Anforderungen an die Druckfestigkeit der Druckbehälter gestellt. So müssen Wärmetauscher bei bestimmten Ausführungen auf Dichtheit bei Drücken von bis zu 100 bar oder höher geprüft werden. Hierbei besteht das Problem, dass die Fluidanschlüsse nur üblichen Betriebsbedingungen ausgesetzt werden dürfen und insbesondere nicht zur Aufnahme axialer Kräfte konstruiert sind.

Aus dem-Dokument DE 25 26 985 ist eine Schnellverbindungsvorrichtung zum zeitweiligen Verbinden einer Vakuum-, Hochvakuum- oder Druckanlage mit einem Rohrstutzen bekannt.

Aus dem Dokument US 2007/0176414 A1 ist eine Anschlussvorrichtung zum Einspeisen eines Fluids in ein Rohrsystem bekannt. In der Anschlussvorrichtung ist ein Ringbauteil axial verlagerbar angeordnet. Eine Axialverlagerung und ein hierdurch bedingtes Zusammendrücken von Dichtungselementen kann mit Hilfe einer äußeren Druckbeaufschlagung über einen Zusatzkanal erfolgen. Aufgrund der Axialverlagerung des Ringbauteils wird ein Zusatzraum innerhalb der Anschlussvorrichtung erweitert, so dass in dieses das einzuspeisende Fluid eintreten kann.

Im Dokument US 4,345,783 ist eine Anschlusseinrichtung für ein Rohrsystem offenbart, bei der ein Kolben in der Anschlussvorrichtung ebenfalls mit Einspeisen eines zusätzlichen Druckfluids axial verlagerbar ist.

Im Dokument US 2,469,198 ist eine Druckluftanschlussvorrichtung beschrieben. Das Dokument GB 819,387 offenbart eine Rohranschlusseinrichtung.

### Zusammenfassung der Erfindung

Aufgabe der Erfindung ist es, eine Anschlussvorrichtung zum Anschließen eines Druckbehälters an einen Druckprüfstand in selbstverstärkender Ausführung zu schaffen, mit dem Druckbehälter auch für hohe Prüfdrücke an einen Druckprüfstand angeschlossen werden können, ohne dass es zu einer unzulässigen Belastung von Teilen des Druckbehälters kommt, insbesondere von Druckbehälteranschlüssen.

Diese Aufgabe wird erfindungsgemäß durch eine Anschlussvorrichtung zum Anschließen eines Druckbehälters an einen Druckprüfstand in selbstverstärkender Ausführung nach dem unabhängigen Anspruch 1 gelöst. Vorteilhafte Ausgestaltungen der Erfindung sind Gegenstand von abhängigen Unteransprüchen.

Die Erfindung umfasst den Gedanken einer Anschlussvorrichtung zum Anschließen eines Druckbehälters an einen Druckprüfstand in selbstverstärkender Ausführung, mit: einem Grundbauteil, einer an dem Grundbauteil gebildeten Anschlusseinrichtung für einen Anschluss an einen zu prüfenden Druckbehälter, einer weiteren an dem Grundbauteil gebildeten Anschlusseinrichtung für einen Anschluss an einen Druckprüfstand, einer Fluidzuführung, die für das Zuführten eines druckbeaufschlagten Prüffluids in den zu prüfenden Druckbehälter in dem Grundbauteil die Anschlusseinrichtung und die weitere Anschlusseinrichtung verbindend gebildet ist, einem Funktionsbauteil, welches an dem Grundbauteil in einer Bauteilaufnahme in Längsrichtung des Grundbauteils verlagerbar angeordnet ist, einem Dichtring aus elastischem Material, der an dem Grundbauteil gelagert ist und auf dem Funktionsbauteil lagert, und einer weiteren Fluidzuführung, die in dem Grundbauteil gebildet und konfiguriert ist, ein druckbeaufschlagtes Zusatzfluid in einen Funktionsraum in der Bauteilaufnahme einzuleiten, derart, dass das Funktionsbauteil in der Bauteilaufnahme den Dichtring zusammendrückend verlagert wird und ein weiterer Funktionsraum vergrößert wird, in welchen zur weiteren Druckbeaufschlagung des Funktionsbauteils und somit zum weiteren Zusammendrücken des Dichtrings das druckbeaufschlagte Prüffluid einströmen kann.

Mit Hilfe der vorgeschlagenen Anschlussvorrichtung wird sichergestellt, dass wenigstens Anschlüsse eines Druckbehälters beim Prüfen des Druckbehälters auf einen Prüfstand selbst nicht mit dem ganzen Prüfdruck beaufschlagt werden, der auf den Druckbehälter gegeben wird. Dieses ist insbesondere dadurch erreicht, dass das Prüffluid einerseits und das Zusatzfluid andererseits in getrennte Funktionsräume einströmen, um im Zusammenwirken einen dichten Anschluss des Druckbehälters an den Prüfstand mit Hilfe des Dichtrings aus elastischem Material zu gewährleisten. Mit Hilfe des druckbeaufschlagten Zusatzfluids, welches in den Funktionsraum in der Bauteilaufnahme einströmt, wird der axiale Druck auf eine innere Fläche des Funktionsteils erhöht und somit der Dichtring anfänglich in gewissem Umfang zusammengedrückt. Gleichzeitig wird mit dem einströmenden Prüffluid der axiale Druck auf eine äußere Fläche des Funktionsteils erhöht, wodurch der Dichtring weiter zusammengedrückt wird. Das Vergrößern des weiteren Funktionsraumes umfasst sowohl den Gedanken, dass der Funktionsraum aufgrund des von dem Zusatzfluid ausgeübten Druckes in kleinem Umfang erst entsteht und anschließend durch die Wirkung des Prüffluids vergrößert wird. Es kann aber auch vorgesehen sein, dass der weitere Funktionsraum von Beginn an in kleiner Ausführung gegeben ist und dann aufgrund der Wirkung der Fluide vergrößert wird.

Die beiden Funktionsräume sind in der Bauteilaufnahme gegeneinander abgedichtet. Hierdurch werden Wechselwirkungen zwischen dem Zusatzfluid, dem Prüffluid sowie einem Umgebungsfluid unterbunden. Zu diesem oder anderen Dichtungszwecken können an verschiedenen Elementen der Anschlussvorrichtung Ausnehmungen zum Aufnehmen von Dichtungselementen vorgesehen sein, insbesondere von Dichtungsringen. Derartige Ausnehmungen können zum Beispiel an der Anschlusseinrichtung für den Anschluss für den zu prüfenden Druckbehälter, der weiteren Anschlusseinrichtung für den Anschluss an den Druckprüfstand, an dem Funktionsbauteil und / oder im Bereich der Bauteilaufnahme vorgesehen sein.

Mit Hilfe der vorgeschlagenen Anschlussvorrichtung ist ein selbstverstärkender Prüfadapter geschaffen, bei dem die dichtende Anschlusswirkung aufgrund der Wirkung des Drucks des Prüffluids selbsttätig verstärkt wird.

Das Grundbauteil ist mit einem Basisbauteil, an welchem die Anschlusseinrichtung gebildet ist, und einem Kopfteil gebildet, welches auf dem Basisbauteil angeordnet ist.

Die Bauteilaufnahme ist mit einem unteren Aufnahmeabschnitt an dem Basisbauteil und einem oberen Aufnahmeabschnitt an dem Kopfbauteil gebildet.

Das Funktionsbauteil ist im Querschnitt S-förmig gebildet. Das Funktionsbauteil verfügt über einen mittleren Abschnitt, der sich in Längsrichtung des Grundbauteils erstreckt. In beiden Endbereichen sind am Funktionsbauteil abgewinkelte Abschnitte gebildet, vorzugsweise in einem Winkel von etwa 90 Grad. Die Abwinklung erfolgt in entgegengesetzten Richtungen. Bei dieser oder anderen Ausführungsformen ist der Dichtring aus elastischem Material vorzugsweise formschlüssig an dem Funktionsbauteil gelagert.

Bevorzugt sieht eine Fortbildung der Erfindung vor, dass die Anschlusseinrichtung und / oder die weitere Anschlusseinrichtung mit einem Schnellverschluss gebildet sind. Es kann vorgesehen sein, dass der Schnellverschluss als ein automatischer Schnellverschluss ausgeführt ist.

Bei einer vorteilhaften Ausgestaltung der Erfindung kann vorgesehen sein, dass ein Eingang der weiteren Fluidzuführung an der weitem Anschlusseinrichtung gebildet ist.

Eine Weiterbildung der Erfindung kann vorsehen, dass in der Bauteilaufnahme ein unterer und ein oberer Anschlag für die Verlagerung des Funktionsbauteils gebildet sind. Auf diese Weise begrenzt die Bauteilaufnahme den Umfang, in welchem der Dichtring aus dem elastischen Material aufgrund des Druckes des Funktionsbauteils zusammengedrückt wird.

Bei einer zweckmäßigen Ausgestaltung der Erfindung kann vorgesehen sein, dass die weitere Fluidzuführung mit einem kleineren Fluidkanalquerschnitt gebildet ist als die Fluidzuführung.

Eine vorteilhafte Ausführungsform der Erfindung sieht vor, dass ein prüfstandseitiger Eingang und ein druckbehälterseitiger Ausgang der Fluidzuführung auf entgegengesetzten Stirnseiten des Grundbauteils gebildet sind. Vorzugsweise ist die Fluidzuführung mit einem geraden Kanal zwischen den entgegengesetzten Stirnseiten des Grundbauteils gebildet.

Bevorzugt sieht eine Fortbildung der Erfindung vor, dass eine mittels des Zusatzfluids in dem Funktionsraum druckbeaufschlagte Funktionsfläche an dem Funktionsbauteil größer als eine mittels des Prüffluids in dem weiteren Funktionsraum druckbeaufschlagte Funktionsfläche an dem Funktionsbauteil ist.

### Beschreibung bevorzugter Ausführungsbeispieles der Erfindung

Die Erfindung wird im Folgenden anhand von bevorzugten Ausführungsbeispielen unter Bezugnahme auf Figuren einer Zeichnung näher erläutert. Hierbei zeigen:
- Fig. 1: eine perspektivische Darstellung einer Anschlussvorrichtung zum Anschließen eines Druckbehälters an einen Druckprüfstand und
- Fig. 2: eine Schnittdarstellung der Anschlussvorrichtung aus Fig. 1.

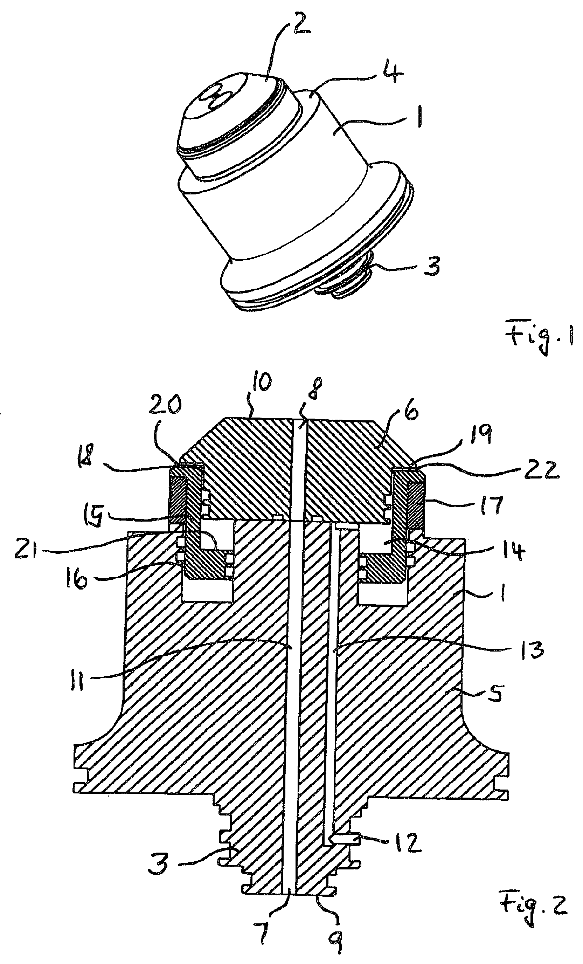

Fig. 1 zeigt eine perspektivische Darstellung einer Anschlussvorrichtung zum Anschließen eines Druckbehälters an einen Druckprüfstand mit einem Grundbauteil 1, an dem eine Anschlusseinrichtung 2 für einen Anschluss an einen zu prüfenden Druckbehälter und eine weitere Anschlusseinrichtung 3 für einen Anschluss an einen Druckprüfstand gebildet sind. Üblicherweise wird die in Fig. 1 gezeigte Anschlussvorrichtung bei der Verwendung im Zusammenhang mit einem Prüfstand mit Hilfe der weiteren Anschlusseinrichtung 3 in einem zugeordneten Anschluss des Druckprüfstandes (nicht dargestellt) platziert. Vorzugsweise erfolgt dies unter Nutzung eines Schnellverschlusses.

Auf der Gegenseite des Grundbauteils 1 erfolgt dann mit Hilfe der Anschlusseinrichtung 2 die Ankopplung an den zu prüfenden Druckbehälter (nicht dargestellt). Der zu prüfende Druckbehälter lagert dann bei der dargestellten Anschlussvorrichtung auf einer Auflagefläche 4, so dass der Anschluss des zu prüfenden Druckbehälters, an welchen die Kopplung erfolgt, die Anschlusseinrichtung 2 umgreift.

Fig. 2 zeigt eine Schnittdarstellung der Anschlussvorrichtung aus Fig. 1. Das Grundbauteil 1 ist mit einem Basisbauteil 5 sowie einem hierauf aufgesetzten Kopfbauteil 6 gebildet. Zum Einleiten eines Prüffluides beim Testen des Druckbehälters auf einem Prüfstand ist zwischen einem Eingang 7 und einem Ausgang 8 auf entgegengesetzten Stirnseiten 9, 10 des Grundbauteils 1 eine Fluidzuführung 11 hergestellt. Durch die Fluidzuführung 11 strömt beim Prüfen des Druckbehälters auf dem Prüfstand das druckbeaufschlagte Prüffluid.

Ein Eingang 12 einer weiteren Fluidzuführung 13 ist im Bereich der weiteren Anschlusseinrichtung 3 gebildet. Über die weitere Fluidzuführung 13 wird bei der Nutzung auf dem Prüfstand ein Funktionsraum 14 mit Druck beaufschlagt, indem Druckluft eingespeist wird, beispielsweise mit einem Druck von 10 bis 20 bar. Diese Druckbeaufschlagung des Funktionsraumes 14 führt dazu, dass ein Mittelteil 15 in einer unteren Bauteilaufnahme 16 nach unten gedrückt wird. Aufgrund des nach unten Drückens des Mittelteils 15 wird ein Dichtring 17 aus elastischem Material zusammengedrückt und entfaltet so eine erste Dichtungswirkung zum Abdichten des Anschlusses an dem zu prüfenden Druckbehälter.

Das Herunterdrücken des Mittelteils 15 führt dann dazu, dass in einer oberen Bauteilaufnahme 18 auf der Oberseite 19 des Funktionsbauteils ein weiterer Funktionsraum 20 entsteht, in welchen das in den zu prüfenden Druckbehälter eingespeiste Prüffluid einströmen kann, wodurch das Funktionsbauteil 15 weiter nach unten gedrückt wird und der Dichtring 17 weiter zusammengedrückt wird. Es ist so ein selbstverstärkendes System gebildet, mit dem es vermieden ist, dass der vom Prüffluid aufgegebene Druck auf die Anschlüsse des zu prüfenden Druckbehälters selbst einwirkt.

Eine Funktionsfläche 21, die in dem Funktionsraum 14 mit dem Druck des Zusatzfluids beaufschlagt wird, ist größer als eine weitere Funktionsfläche 22 auf der Oberseite 19 des Funktionsbauteils 15. Demgegenüber ist jedoch der Druck des Prüffluids wesentlicher größer als der mit dem Zusatzfluid aufgegebene Druck.

An dem Grundbauteil 1 sind in verschiedenen Bereichen Ausnehmungen 23 gebildet, die zur Aufnahme von Dichtungselementen (nicht dargestellt), zum Beispiel von Dichtungsringen genutzt werden können.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Anschlussvorrichtung zum Anschließen eines Druckbehälters an einen Druckprüfstand in selbst verstärkender Ausführung, mit:
- einem Grundbauteil (1), welches mit einem Basisbauteil (5) und einem an dem Basisbauteil (5) angeordneten Kopfbauteil (6) gebildet ist,
- einer an dem Kopfbauteil (6) des Grundbauteils (1) gebildeten Anschlusseinrichtung (2) für einen Anschluss an einen zu prüfenden Druckbehälter,
- einer weiteren an dem Basisbauteil (5) des Grundbauteils (1) gebildeten Anschlusseinrichtung (3) für einen Anschluss an einen Druckprüfstand,
- einer Fluidzuführung (11), die für das Zuführen eines druckbeaufschlagten Prüffluids in den zu prüfenden Druckbehälter in dem Grundbauteil (1) die Anschlusseinrichtung (2) und die weitere Anschlusseinrichtung (3) verbindend gebildet ist, wobei ein prüfstandseitiger Eingang (7) und ein druckbehälterseitiger Ausgang (8) der Fluidzuführung (11) auf entgegengesetzten Stirnseiten (9, 10) des Grundbauteils (1) gebildet sind,
- einem Funktionsbauteil (15), welches an dem Grundbauteil (1) in einer Bauteilaufnahme (16, 18) in Längsrichtung des Grundbauteils (1) verlagerbar angeordnet ist, wobei die Bauteilaufnahme (16, 18) zum Aufnahmen des Funktionsbauteils (15) mit einem unteren Aufnahmeabschnitt (16) an dem Basisbauteil (5) und einem oberen Aufnahmeabschnitt (18) an dem Kopfbauteil (6) gebildet sind,
- einem Dichtring (17) aus elastischem Material, der an dem Grundbauteil (1) gelagert ist und auf dem Funktionsbauteil (15) lagert, und
- einer weiteren Fluidzuführung (13), die in dem Grundbauteil (1) gebildet und konfiguriert ist, ein druckbeaufschlagtes Zusatzfluid in einen Funktionsraum (14) in der Bauteilaufnahme (16, 18) einzuleiten, derart, dass das Funktionsbauteil (15) in der Bauteilaufnahme (16, 18) den Dichtring (17) zusammendrückend verlagert und hierbei ein weiterer Funktionsraum (20) der Anschlussvorrichtung vergrößert wird, in welchen zur weiteren Druckbeaufschlagung des Funktionsbauteils (15) und somit zum weiteren Zusammendrücken des Dichtrings (17) das druckbeaufschlagte Prüffluid einströmen kann,
wobei das Funktionsbauteil (15) S-förmig ist mit einem mittleren Abschnitt (15) und in beiden Endbereichen entgegengesetzt angewinkelten Abschnitten und wobei das Funktionsbauteil (15) beim Zusammendrücken des Dichtrings (17) in der Bauteilaufnahme (16, 18) zum prüfstandseitigen Eingang (7) auf der Stirnseite (9) des Basisbauteils (5) hin gedrückt wird.

2. Anschlussvorrichtung nach Anspruch 1, **dadurch gekennzeichnet, dass** die Anschlusseinrichtung (2) und / oder die weitere Anschlusseinrichtung (3) mit einem Schnellverschluss gebildet sind.

3. Anschlussvorrichtung nach Anspruch 1 oder 2, **dadurch gekennzeichnet, dass** ein Eingang (12) der weiteren Fluidzuführung (13) an der weiteren Anschlusseinrichtung (3) gebildet ist.

4. Anschlussvorrichtung nach mindestens einem der vorangehenden Ansprüche, **dadurch gekennzeichnet, dass** in der Bauteilaufnahme (16, 18) ein unterer und ein oberer Anschlag für die Verlagerung des Funktionsbauteils (15) gebildet sind.

5. Anschlussvorrichtung nach mindestens einem der vorangehenden Ansprüche, **dadurch gekennzeichnet, dass** das Funktionsbauteil (15) im Querschnitt S-förmig gebildet ist.

6. Anschlussvorrichtung nach mindestens einem der vorangehenden Ansprüche, **dadurch gekennzeichnet, dass** die weitere Fluidzuführung (13) mit einem kleineren Fluidkanalquerschnitt gebildet ist als die Fluidzuführung (11).

7. Anschlussvorrichtung nach mindestens einem der vorangehenden Ansprüche, **dadurch gekennzeichnet, dass** eine mittels des Zusatzfluids in dem Funktionsraum (14) druckbeaufschlagte Funktionsfläche (21) an dem Funktionsbauteil (15) größer als eine mittels des Prüffluids in dem weiteren Funktionsraum (20) druckbeaufschlagte Funktionsfläche (22) an dem Funktionsbauteil (15) ist.

## Claims

1. Connection device for connecting a pressurised container to a pressure test bench in a self-reinforcing embodiment, comprising:
- a main component (1) which is formed by a bottom component (5) and a top component (6) arranged on the bottom component (5),
- a connection device (2) formed on the top component (6) of the main component (1) for a connection to a pressurised container to be tested,
- a further connection device (3) formed on the bottom component (5) of the main component (1) for a connection to a pressure test bench,
- a fluid supply line (11), which is formed for supplying a pressurised test fluid into the pressurised container to be tested, in the main component (1) and which connects the connection device (2) and the further connection device (3), wherein an inlet (7) on the test bench side and an outlet (8) on the pressurised container side of the fluid supply line (11) are formed on opposing front faces (9, 10) of the main component (1),
- a functional component (15) which is displaceably arranged on the main component (1) in a component receiver (16, 18) in the longitudinal direction of the main component (1), wherein the component receivers (16, 18) for receiving the functional component (15) are formed with a lower receiving portion (16) on the bottom component (5) and an upper receiving portion (18) on the top component (6),
- a sealing ring (17) made of resilient material which is mounted on the main component (1) and bears against the functional component (15) and
- a further fluid supply line (13) which is formed in the main component (1) and which is configured in order to introduce an additional pressurised fluid into a functional space (14) in the component receiver (16, 18), such that the functional component (15) in the component receiver (16, 18) displaces the sealing ring (17) by compression and at the same time a further functional space (20) of the connection device is enlarged, the pressurised test fluid being able to flow therein for further pressurisation of the functional component (15) and thus for further compression of the sealing ring (17),
wherein the functional component (15) is S-shaped with a central portion (15) and opposingly angled-back portions in both end regions and wherein the functional component (15) is pressed toward the inlet (7) on the test bench side on the front face (9) of the bottom component (5) when the sealing ring (17) is compressed in the component receiver (16, 18).

2. Connection device according to Claim 1, **characterised in that** the connection device (2) and/or the further connection device (3) are formed with a quick-release closure.

3. Connection device according to Claim 1 or 2, **characterised in that** an inlet (12) of the further fluid supply (13) is formed on the further connection device (3).

4. Connection device according to at least one of the preceding claims, **characterised in that** a lower stop and an upper stop for the displacement of the functional component (15) are formed in the component receiver (16, 18).

5. Connection device according to at least one of the preceding claims, **characterised in that** the functional component (15) is formed to be S-shaped in cross section.

6. Connection device according to at least one of the preceding claims, **characterised in that** the further fluid supply line (13) is formed with a smaller fluid channel cross section than the fluid supply line (11).

7. Connection device according to at least one of the preceding claims, **characterised in that** a functional surface (21) on the functional component (15) which is pressurised by means of the additional fluid in the functional space (14) is larger than a functional surface (22) on the functional component (15) which is pressurised by means of the test fluid in the further functional space (20).

## Revendications

1. Dispositif de raccordement pour le raccordement d'un récipient sous pression à un banc d'essai de pression dans une réalisation auto-renforcée, comprenant :
- une pièce de fondation (1) formée avec une pièce de base (5) et une pièce de tête (6) disposée sur la pièce de base (5),
- un système de raccordement (2) formé sur la pièce de tête (6) de la pièce de fondation (1), pour le raccordement à un récipient sous pression à tester,
- un autre système de raccordement (3) formé sur la pièce de base (5) de la pièce de fondation (1), pour le raccordement à un banc d'essai de pression,
- une arrivée de fluide (11) conçue pour alimenter un fluide d'essai sous pression vers le récipient sous pression à tester dans la pièce de fondation (1), tout en reliant le système de raccordement (2) et l'autre système de raccordement (3), dans lequel une entrée côté banc d'essai (7) et une sortie côté récipient sous pression (8) de l'arrivée de fluide (11) sont formées sur des côtés frontaux opposés (9, 10) de la pièce de fondation (1),
- une pièce fonctionnelle (15) agencée dans un logement de pièce (16, 18) sur la pièce de fondation (1), de façon à pouvoir se déplacer dans la direction longitudinale de la pièce de fondation (1), le logement de pièce (16, 18) étant formée avec une section de logement inférieure (16) sur la pièce de base (5) et section de logement supérieure (18) sur la pièce de tête (6), pour la réception de la pièce fonctionnelle (15),
- une bague d'étanchéité (17) constituée d'un matériau élastique, laquelle est montée sur la pièce de fondation (1) et s'appuie sur la pièce fonctionnelle (15), et
- une autre arrivée de fluide (13) formée dans la pièce de fondation (1) et configurée pour l'introduction d'un fluide annexe sous pression dans une chambre fonctionnelle (14) dans le logement de pièce (16, 18), de telle façon que la pièce fonctionnelle (15) déplace la bague d'étanchéité (17) dans le logement de pièce (16, 18) tout en la comprimant, agrandissant ainsi une autre chambre fonctionnelle (20) du dispositif de raccordement, dans laquelle le fluide d'essai sous pression peut affluer pour la mise sous pression supplémentaire de la pièce fonctionnelle (15) et donc pour la compression supplémentaire de la bague d'étanchéité (17),
dans lequel la pièce fonctionnelle (15) présente une forme en S, avec une section centrale (15) et des sections coudées opposées dans les deux régions terminales, et dans lequel la pièce fonctionnelle (15) est comprimée vers l'entrée côté banc d'essai (7) sur le côté frontal (9) de la pièce de base (5), lors de la compression de la bague d'étanchéité (17) dans le logement de pièce (16, 18).

2. Dispositif de raccordement selon la revendication 1, **caractérisé en ce que** le système de raccordement (2) et/ou l'autre système de raccordement (3) sont conçus avec une fermeture rapide.

3. Dispositif de raccordement selon la revendication 1 ou 2, **caractérisé en ce qu'**une entrée (12) de l'autre arrivée de fluide (13) est formée sur l'autre système de raccordement (3).

4. Dispositif de raccordement selon l'une au moins des revendications précédentes, **caractérisé en ce qu'**une butée inférieure et une butée supérieure sont formées dans le logement de pièce (16, 18), pour le déplacement de la pièce fonctionnelle (15).

5. Dispositif de raccordement selon l'une au moins des revendications précédentes, **caractérisé en ce que** la pièce fonctionnelle (15) est formée avec une section transversale en forme de S.

6. Dispositif de raccordement selon l'une au moins des revendications précédentes, **caractérisé en ce que** l'autre arrivée de fluide (13) est formée avec une plus petite section transversale de canal à fluide que l'arrivée de fluide (11).

7. Dispositif de raccordement selon l'une au moins des revendications précédentes, **caractérisé en ce qu'**une surface fonctionnelle (21) sur la pièce fonctionnelle (15) qui est mise sous pression à l'aide d'un fluide annexe dans la chambre fonctionnelle (14) est plus grande qu'une surface fonctionnelle (22) sur la pièce fonctionnelle (15) qui est mise sous pression à l'aide du fluide d'essai dans l'autre chambre fonctionnelle (20).
